# EUROPÄISCHE PATENTSCHRIFT

(11) **EP 2 625 056 B1**
(45) Veröffentlichungstag und Bekanntmachung des Hinweises auf die Patenterteilung: **21.01.2015**
(21) Anmeldenummer: 11764557.2
(22) Anmeldetag: 05.10.2011
(51) Int. Cl.: B60K 35/00, B60Q 1/52, G02B 27/01, G06F 3/01

(54) **KRAFTFAHRZEUG MIT EINER VORRICHTUNG ZUR BEEINFLUSSUNG DER BLICKRICHTUNG DES FAHRERS**
MOTOR VEHICLE HAVING A DEVICE FOR INFLUENCING THE VIEWING DIRECTION OF THE DRIVER
VÉHICULE AUTOMOBILE ÉQUIPÉ D'UN DISPOSITIF PERMETTANT D'AGIR SUR LA DIRECTION D'OBSERVATION DU CONDUCTEUR

(30) Priorität: 05.10.2010 DE 102010041961
(43) Veröffentlichungstag der Anmeldung: 14.08.2013
(73) Patentinhaber: Bayerische Motoren Werke Aktiengesellschaft, 80809 München (DE)
(72) Erfinder: LORENZ, Lutz, 91126 Schwabach (DE); LINDBERG, Thomas, 81541 Muenchen (DE)
(86) Internationale Anmeldenummer: PCT/EP2011/067356
(87) Internationale Veröffentlichungsnummer: WO 2012/045760

(56) Entgegenhaltungen:
- WO-A1-2007/028630
- JP-A- 2003 291 688
- US-A1- 2009 231 116

## Beschreibung

Die Erfindung betrifft ein Kraftfahrzeug mit einer Vorrichtung zur Beeinflussung der Blickrichtung des Fahrers, wobei das Kraftfahrzeug über Mittel zur Gefahrendetektion und Mittel zur Ausgabe zumindest einer Warnung vor einer detektierten Gefahr verfügt und wobei das Kraftfahrzeug über eine Anzeigeeinheit zur Anzeige von Informations- und/oder Entertainmentinhalten verfügt, die im Wesentlichen mittig in der Armaturentafel des Kraftfahrzeugs angeordnet ist.

Die in modernen Kraftfahrzeugen zunehmend verfügbare Möglichkeit der Anzeige von Informations- und/oder Entertainmentinhalten erhöht den Komfort der Fahrzeuginsassen, kann jedoch auch zur Ablenkung vom Verkehrsgeschehen beitragen. Insbesondere erlauben es viele moderne Kraftfahrzeuge, Informations- und/oder Entertainmentinhalte auf einer Anzeigeeinheit anzuzeigen, die in etwa in der Mitte der Instrumententafel bzw. des Armaturenbretts, gegebenenfalls leicht zum Fahrer geneigt, angeordnet ist. Eine solche Anzeigeeinheit wird in der Folge auch als Central Information Display (CID) bezeichnet. Eine Blickzuwendung des Fahrers zum CID führt zwangsläufig dazu, dass der Fahrer den Blick nicht mehr unmittelbar auf das vor ihm liegende Verkehrsgeschehen richtet.

Selbst wenn ein Fahrzeug über Mittel zur Gefahrendetektion und über Mittel zur Ausgabe von Warnungen vor detektierten Gefahren verfügt, ist es häufig nicht in ausreichendem Maße möglich, die Aufmerksamkeit des Fahrers im geeigneten Moment auf das Verkehrsgeschehen zu lenken.

Das Dokument JP 2003 291688 A offenbart ein Kraftfahrzeug der eingangs genannten Gattung, durch welche ein Hindernis durch eine dynamische Markierung hervorgehoben werden kann, wobei das Dokument insbesondere zeigt: Ein Kraftfahrzeug mit einer Vorrichtung zur Beeinflussung der Blickrichtung des Fahrers, wobei das Kraftfahrzeug über Mittel zur Gefahrendetektion und Mittel zur Ausgabe zumindest einer Warnung vor einer detektierten Gefahr verfügt, das Kraftfahrzeug über eine Anzeigeeinheit zur Anzeige von Informations- und/oder Entertainmentinhalten verfügt, die im Wesentlichen mittig in der Armaturentafel des Kraftfahrzeugs angeordnet ist, wobei im Fahrzeuginnenraum eine zur Ausgabe einer dynamischen Lichtanimation geeignete Beleuchtungsvorrichtung angeordnet ist, die sich im Wesentlichen von der Anzeigeeinheit hin zum Fahrersichtfeld auf der Windschutzscheibe des Kraftfahrzeugs erstreckt, und- zur Ausgabe einer Warnung vor einer Gefahr, die das Verkehrsgeschehen vor dem Kraftfahrzeug betrifft oder betreffen könnte, eine Lichtanimation ausgebbar ist, die eine Lichtbewegung in Richtung des Fahrersichtfelds darstellt.

Es ist eine Aufgabe der Erfindung, ein Kraftfahrzeug anzugeben, das im Gefahrenfall eine verbesserte Aufmerksamkeitslenkung erlaubt.

Gelöst wird diese Aufgabe durch ein Kraftfahrzeug gemäß Anspruch 1. Vorteilhafte Ausführungsformen und Weiterbildungen der Erfindung ergeben sich aus den abhängigen Ansprüchen.

Bei dem erfindungsgemäßen Kraftfahrzeug ist im Fahrzeuginnenraum eine zur Ausgabe einer dynamischen Lichtanimation geeignete Beleuchtungsvorrichtung angeordnet, die sich im Wesentlichen von der Anzeigeeinheit hin zum Fahrersichtfeld auf der Windschutzscheibe des Kraftfahrzeugs erstreckt. Wird eine Gefahr detektiert, die das Verkehrsgeschehen vor dem Kraftfahrzeug betrifft oder zumindest betreffen könnte, so ist zur Ausgabe einer Warnung vor dieser Gefahr mittels der Beleuchtungsvorrichtung eine dynamische Lichtanimation ausgebbar, die eine Lichtbewegung in Richtung des Fahrersichtfelds darstellt.

Der Blick des Fahrers wird somit mit Hilfe der dynamischen Lichtanimation weg von der Anzeigevorrichtung hin zum Verkehrsgeschehen gelenkt. Dabei wird davon ausgegangen, dass das Verkehrsgeschehen vom Fahrer am besten überblickt wird, wenn sein Blick auf das so genannte Fahrersichtfeld auf der Windschutzscheibe des Kraftfahrzeugs gerichtet ist, also den Bereich der Windschutzscheibe, durch den eine gedachte Verbindungslinie zwischen den Augen des Fahrers und verkehrsrelevanten Objekten im Vorfeld bzw. in Fahrtrichtung des Kraftfahrzeugs typischerweise verläuft.

Erfindungsgemäß erstreckt sich die Beleuchtungsvorrichtung zumindest teilweise im Wesentlichen linienartig entlang einer Erstreckungslinie von der Anzeigeeinheit hin zum Fahrersichtfeld und ist die Lichtanimation so gestaltet, dass die dargestellte Lichtbewegung entlang der Erstreckungslinie erfolgt. Der Begriff linienartig ist dabei zu verstehen als im Wesentlichen lang und schmal. Vorzugsweise erstreckt sich die Beleuchtungsvorrichtung zumindest teilweise im Wesentlichen gerade entlang einer Erstreckungsgeraden. Der Begriff linienartig ist jedoch nicht zwingend zu verstehen im Sinne von gerade, sondern die Linie kann beispielsweise auch gekrümmt, mit Ecken und/oder geschlängelt verlaufen.

Die Beleuchtungsvorrichtung umfasst eine Reihe von mehreren Leuchtdioden, die einzeln entlang der Erstreckungslinie angeordnet sind und die sequenziell beleuchtbar sind, um zu der Lichtanimation beizutragen. Leuchtdioden sind sehr klein und niedrig bauend fertigbar, besitzen schnelle Reaktionszeiten, können also in einer Art "Blitzbetrieb" betrieben werden, und weisen einen geringen Energiebedarf auf. Sie sind daher besonders gut zum Aufbau einer Reihe kleiner Lichtquellen geeignet, durch welche mittels sequenzieller Beleuchtung der einzelnen Lichtquellen eine Lichtanimation "wandert". Unter einer sequenziellen Beleuchtung sei auch noch der Fall einer zeitversetzten Beleuchtung zu verstehen, in welchem zwei oder mehr benachbarte Lichtquellen in einem Übergangszeitraum gleichzeitig leuchten. Die Verwendung anderer Lichtquellen mit derselben Eignung für die Umsetzung der vorliegenden Erfindung ist selbstverständlich äquivalent zur Verwendung von Leuchtdioden.

Gemäß einer ersten Ausführungsvariante der vorliegenden Erfindung besteht die Beleuchtungsvorrichtung aus der Reihe von Leuchtdioden, umfasst also keine weiteren Lichtquellen und die Lichtanimation besteht ausschließlich in der sequenziellen Beleuchtung der Leuchtioden.

Gemäß einer zweiten Ausführungsvariante der vorliegenden Erfindung umfasst die Beleuchtungsvorrichtung ferner die Anzeigeeinheit selbst und zur Darstellung der Lichtbewegung ist zunächst eine Grafikanimation auf der Anzeigeeinheit ausgebbar, welche eine in die Erstreckungslinie einmündende Grafikbewegung umfasst und welche durch die sequenzielle Beleuchtung der Leuchtdioden fortgesetzt wird. Der Blick des Fahrers fällt dann zunächst auf die Grafikanimation, folgt der in die Erstreckungslinie einmündenden Grafikbewegung und folgt anschließend, geführt durch die sequenzielle Beleuchtung der Leuchtdioden, der Erstreckungslinie.

Die Grafikbewegung kann dabei insbesondere eine Stauchung und/oder Bewegung eines zuvor von der Anzeigeeinheit dargestellten Anzeigebilds umfassen, gegebenenfalls auch eine Randbeschneidung. Das zuvor von der Anzeigeeinheit dargestellte Anzeigebild wird dem Fahrer somit regelrecht aus dem Blick "weggenommen". Verläuft die Grafikbewegung im Wesentlichen in Richtung der Erstreckungslinie und mündet sie aus Sicht des Betrachters gar in die Erstreckungslinie ein, so kann beim Betrachter bzw. Fahrer der Eindruck hervorgerufen werden, das zuvor von der Anzeigeeinheit dargestellte Anzeigebild werde regelrecht entlang der Erstreckungslinie "aufgesogen" bzw. in diese hineingezogen. Die weitere Lichtanimation entlang der Erstreckungslinie kann dann beim Betrachter bzw. Fahrer - obwohl nicht mehr grafisch, sondern rein auf einem Lichteffekt, nämlich der sequenziellen Beleuchtung der Leuchtdioden beruhend - als weitere Wanderung des "aufgesogenen" Anzeigebilds entlang der Erstreckungslinie wahrgenommen werden.

Weist das Kraftfahrzeug ein Head-up Display auf, so kann es vorteilhaft sein, wenn während und/oder nach der Ausgabe der Lichtanimation zumindest vorübergehend ein Abbild des zuvor von der Anzeigeeinheit dargestellten Anzeigebilds durch das Head-up Display dargestellt wird. Das, wie oben beschrieben, entlang der Erstreckungslinie "gewanderte" Anzeigebild erscheint dann tatsächlich wieder im Fahrersichtfeld - oder ggf. etwas unterhalb des Fahrersichtfelds, jedenfalls in dessen Nähe. Die Darstellung des Abbilds im Fahrersichtfeld kann gegebenenfalls mit verringerter Auflösung, Detailtreue und/oder Farbgebung (ggf. auch monochrom) erfolgen, ohne den gewünschten Effekt zu verfehlen. Nach einer vorgegebenen Anzeigedauer kann die Anzeige des Head-up Displays wieder ausgeblendet werden, um den nun in Richtung des Fahrersichtfelds abgelenkten Blick des Fahrers auch tatsächlich für dieses freizugeben.

Umfasst die Beleuchtungsvorrichtung eine Reihe von mehreren Leuchtdioden, die einzeln entlang der Erstreckungslinie angeordnet sind und die sequenziell beleuchtbar sind, so kann es vorteilhaft sein, wenn der Abstand der einzelnen Leuchtdioden zum Fahrersichtfeld hin zunimmt. Zum einen ist das gewünschte "Schwenken" des Blicks des Fahrers gegen Ende der Erstreckungslinie bereits eingeleitet und bedarf keiner engen Führung mehr. Zum anderen lässt der Blick des Fahrers auf die einzelnen weiter von ihm entfernt wahrgenommenen Leuchtpunkte in vielen Fällen optisch zusammenrücken, wenn die Leuchtdioden entlang der Oberfläche der Armaturentafel des Kraftfahrzeugs angeordnet sind. Dies gilt insbesondere dann, wenn die Armaturentafel konvex gewölbt ist.

Aus unter anderem design-technischen und bedien-ergonomischen Gesichtspunkten heraus ist es ferner vorteilhaft, die Leuchtdioden so in das Material der Armaturentafel einzubetten, dass sich eine im Wesentlichen ebene Oberfläche der Armaturentafel ergibt. Dazu können insbesondere flach bauende Leuchtdioden, z.B. in SMD-Technologie ausgeführt, Verwendung finden, die in geeignet vorgesehene Ausnehmungen der Armaturentafel eingesetzt, insbesondere eingeklebt werden. Das Einsetzen kann nachträglich oder bereits bei der Fertigung der Armaturentafel erfolgen. Wird über den Leuchtdioden eine dünne voll- oder teiltransparente Materialschicht aufgebracht, so ergibt sich eine homogene Oberfläche der Armaturentafel, ohne zu große Einbußen hinsichtlich der Sichtbarkeit des Lichts der Leuchtdioden hinnehmen zu müssen.

Besitzt das Kraftfahrzeug Mittel zur Ausgabe verschiedener Warnstufen für die Warnung vor einer detektierten Gefahr, insbesondere zur Ausgabe einer Vorwarnung und einer Akutwarnung, so wird die Lichtanimation vorzugsweise ausschließlich im Falle einer niedrigen Warnstufe ausgegeben; wenn eine Vorwarnung und eine Akutwarnung zur Verfügung stehen, also nur bei der Vorwarnung.

Gemäß einer bevorzugten Ausführungsform der vorliegenden Erfindung verfügt das Kraftfahrzeug über eine Vorrichtung zur Erfassung der Blickrichtung des Fahrers und die Ausgabe der Lichtanimation erfolgt in Abhängigkeit von der erfassten Blickrichtung. Zum einen kann die Ausgabe schlicht und einfach nur dann erfolgen, wenn der Blick des Fahrers auch tatsächlich vom Verkehrsgeschehen abgelenkt ist, insbesondere dann, wenn er auf ein CID des Kraftfahrzeugs gerichtet ist. Zum anderen kann die Lichtanimation gegebenenfalls gezielt dort beginnen, wohin der Blick des Fahrers gerade fällt. Abermals zum anderen kann die Lichtanimation gegebenenfalls so ausgeführt sein, dass die dargestellte Lichtbewegung in unterschiedlichen Geschwindigkeiten ablaufen kann; dann könnte die Lichtbewegung in solcher Geschwindigkeit dargestellt werden, dass der Blick des Fahrers ihr auch tatsächlich folgen kann. Fällt der Blick gegenüber der Lichtbewegung zurück, wird diese gegebenenfalls verlangsamt. Eilt der Blick voraus, wird die Lichtbewegung gegebenenfalls beschleunigt.

Die Erfindung beruht unter anderem auf den nachfolgend dargelegten Überlegungen:
Der Stand der Technik zu Fahrerassistenzsystemen (FAS) und Fahrerinformationssystemen (FIS) ist heute herstellerübergreifend weit fortgeschritten. Beispielsweise werden folgende FAS im Bereich der aktiven Sicherheit von führenden Automobilherstellern bereits auf dem Markt angeboten: Kollisionswarnsysteme, Spurwechselwarner, Spurverlassenswarner, Night Vision inklusive Fußgänger-Warnung. Ferner werden beispielsweise folgende Arten von FIS bereits von auf dem Markt angeboten: Navigationssystem, Entertainment (Radio, TV, DVD....), Telefon, Internet etc.

Auch im Hinblick auf Warnstrategien bei Kollisionsgefahr sind verschiedene Ansätze aus dem Stand der Technik bekannt. Alle oben genannten FAS sollen den Fahrer bei Unaufmerksamkeit vor einer möglichen Gefahr wie z.B. einer Kollision mit anderen Verkehrsteilnehmern oder einem Abkommen von der Fahrbahn warnen. Im Falle eines Kollisionswarnsystems wird typischerweise der Abstand zu vorausfahrenden Verkehrsteilnehmern mit Hilfe eines Radarsensors erfasst und aus der Differenzgeschwindigkeit eine Time to Collision (TTC) berechnet. Basierend auf dieser TTC ergeben sich zeitliche Warnschwellen. Bei nahezu allen führenden Automobilherstellern hat sich ein zweistufiges Warnkonzept etabliert, bevor gegebenenfalls ein (teil)autonomer Bremseingriff stattfindet. Bei einem von der Anmelderin angebotenen System erhält der Fahrer bei einer kritischen Auffahrsituation und Unterschreitung einer ersten Warnschwelle eine Vorwarnung (1. Stufe - optisch) in Form eines Symbols im Instrumentenkombi und im Head-Up Display (HUD). Bei einer ausbleibenden Reaktion des Fahrers und somit einer Unterschreitung einer zweiten Warnschwelle erfolgt eine Akutwarnung (2. Stufe - optisch & akustisch) in Form eines hochfrequenten Warntons und eines blinkenden Symbols im Instrumentenkombi und im HUD. Zusätzlich wird bei manchen bekannten Systemen die Blickrichtung des Fahrers mit Hilfe einer Innenraumkamera analysiert und die Warnung bei Blickabwendung und in kritischen Situationen zeitlich früher ausgegeben.

Bezüglich eines Anzeige- und Bedienkonzepts (ABK) für FIS sind aus dem Stand der Technik ebenfalls vielfältige Lösungen bekannt. Etabliert hat sich in der Automobilindustrie das ursprünglich von der Anmelderin eingeführte Konzept IDRIVE zur Bedienung von FIS. Es beruht auf einer klaren Trennung zwischen Bedienelementen (in der Mittelkonsole) und Anzeige (Display mittig in der Instrumententafel). Über den IDRIVE-Controller lassen sich die wichtigsten Entertainment-, Kommunikations-, Navigations- und Komfortfunktionen aktivieren und steuern.

Ausgehend vom heutigen Stand der Technik und der zunehmenden kostengünstigen Verfügbarkeit hochtechnologischer Automobilkomponenten ist davon auszugehen, dass in der Mehrzahl moderner Fahrzeuge zukünftig eine den Fahrer "beobachtende" Innenraumkamera verfügbar und einsetzbar sein wird, um den Fahrerzustand (Müdigkeit, Aufmerksamkeitsgrad, Blickrichtung, Lidschlag, etc.) zu analysieren. Ferner wird in baldiger Zukunft vermutlich der Einsatz von Vollfarb-HUDs möglich bzw. sogar gängig sein. Hierdurch wird die Darstellung von farbreichen Graphiken im HUD ermöglicht werden (z.B. Bilder, die in Fahrzeugen mit heute marktverfügbarer Technologie nur mit einem so genannten CID, einem Central Information Display in der Mitte der Instrumententafel, darstellbar sind).

Die heute marktverfügbaren Warnkonzepte besitzen in bestimmten Situationen noch Nachteile. Beispielsweise wandern bei der Bedienung eines FIS während der Fahrt typischerweise die Blicke des Fahrers zwischen dem CID (Central Information Display) im Innenraum und der vor dem Fahrzeug liegenden Fahrszene (beobachtet durch das Fahrersichtfeld in der Windschutzscheibe) hin und her. Bei Funktionen, die eine verhältnismäßig lange Gesamtbedienzeit erfordern (z.B. Zieleingabe, Navigation), kann die maximale Dauer einer Blickabwendung von der Fahrbahn bzw. Fahrszene verhältnismäßig lang werden.

Eine rein optische Vorwarnung, die bei Unterschreitung einer ersten Warnschwelle ausgegeben wird, z.B. in Form eines gelben Symbols im Instrumentenkombi und HUD, wird unter Umständen nicht in jedem praktischen Fall wahrgenommen, da der Blick in diesem Moment auf das CID gerichtet ist. Wird bei Unterschreitung einer zweiten Warnschwelle eine Akutwarnung in Form einer ungerichteten akustischen Ausgabe (z.B. Gong) ausgegeben und gegebenenfalls mit einer nun intensiveren optischen Warnung kombiniert, (z.B. rot blinkendes Symbol im Instrumentenkombi und HUD), so nimmt der Fahrer - zumindest in Fällen, in denen die Vorwarnung nicht bemerkt wurde und sich der Blick immer noch auf dem CID befindet - mit gewisser Wahrscheinlichkeit in erster Linie die räumlich ungerichtete akustische Ausgabe wahr. Die kann zu einer verhältnismäßig langen Verarbeitungs- bzw. Reaktionszeit führen, Schließlich muss der Fahrer die rein akustische Ausgabe erst interpretieren und mit der Situation abgleichen ("Was ist die Ursache für den Gong"). Die Reaktion des Fahrers (Bremsen) kann daher zu spät erfolgen, wodurch das Unfallrisiko steigt.

Vorgeschlagen wird daher alternatives Warnkonzept bei Kollisionsgefahr und Ablenkung durch eine Nebenaufgabe. Gelöst werden soll dadurch insbesondere die folgende Frage bzw. Problematik: Wie kann bei Kollisionsgefahr und Ablenkung durch eine Nebenaufgabe die Aufmerksamkeit (insbesondere der Blick) des Fahrers am schnellsten zurück auf die Fahrbahn gelenkt werden? In der Folge werden hierzu drei Lösungsansätze angegeben. Diese beschränken sich alle auf optische Warnausgaben. Um die Reaktionszeiten weiter zu verkürzen, könnten die folgend aufgezeigten Konzepte mit akustischen Ausgaben kombiniert werden (Multimodale Warnkonzepte). Ferner können die drei Lösungsansätze auch miteinander kombiniert werden.

In der Folge wird für alle drei dargestellten Lösungsansätze davon ausgegangen, dass die Blickrichtung des Fahrers durch eine Innenraumkamera (z.B. unterhalb des Kombiinstruments) analysiert wird. Die Warnhinweise werden somit vorzugsweise nur dann ausgelöst, wenn sichergestellt ist, dass der Blick des Fahrers auf das CID gerichtet ist. Ist kein System zur Erfassung des Blickrichtung des Fahrers verfügbar, kann die Blickrichtung und/oder der Grad der Fahrerablenkung geschätzt werden, etwa anhand der aktuellen Anzeige auf dem CID oder anhand der Art und Häufigkeit bzw. Frequenz der Bedieneingaben des Fahrers.

Ferner wird in der Folge für alle drei dargestellten Lösungsansätze davon ausgegangen, dass die Warnhinweise vorzugsweise nur dann ausgelöst werden, wenn eine Gefahr vor dem Fahrzeug detektiert wird, insbesondere eine kritische Auffahrsituation vorliegt, z.B. Abbremsen eines vorausfahrenden Fahrzeugs und dadurch Unterschreiten zumindest einer Warnschwelle.

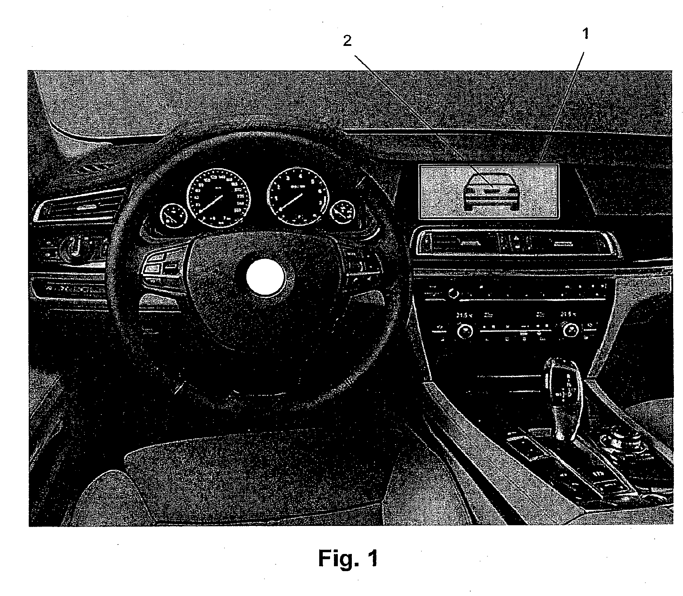

### Nicht-erfindungsgemäßer Lösungsansatz 1 - Optische Warnausgabe direkt im CID (vgl. Fig. 1):

Da eine optische Vorwarnung im Instrumentenkombi bzw. HUD während einer Bedienung im CID leicht übersehen werden kann, wird eine optische Warnung 2 direkt im CID 1 ausgegeben (im Beispielfall gemäß Fig. 1 ist die Warnung als Darstellung eines Fahrzeug-Symbols ausgebildet). Die optische Warnung wird somit direkt an der Stelle ausgegeben, auf die aktuell der Blick gerichtet ist.

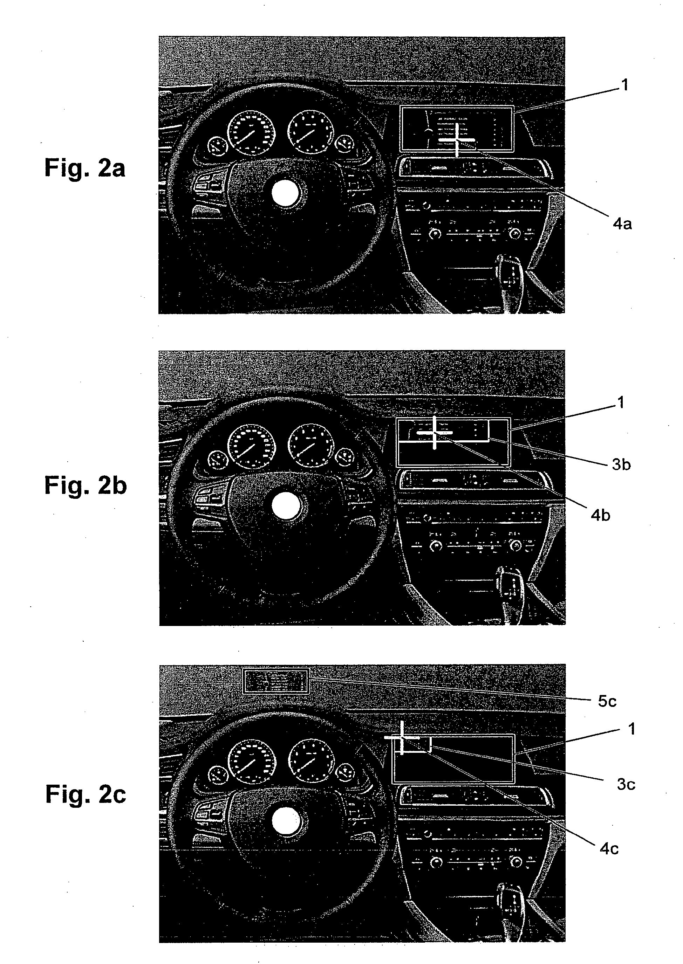

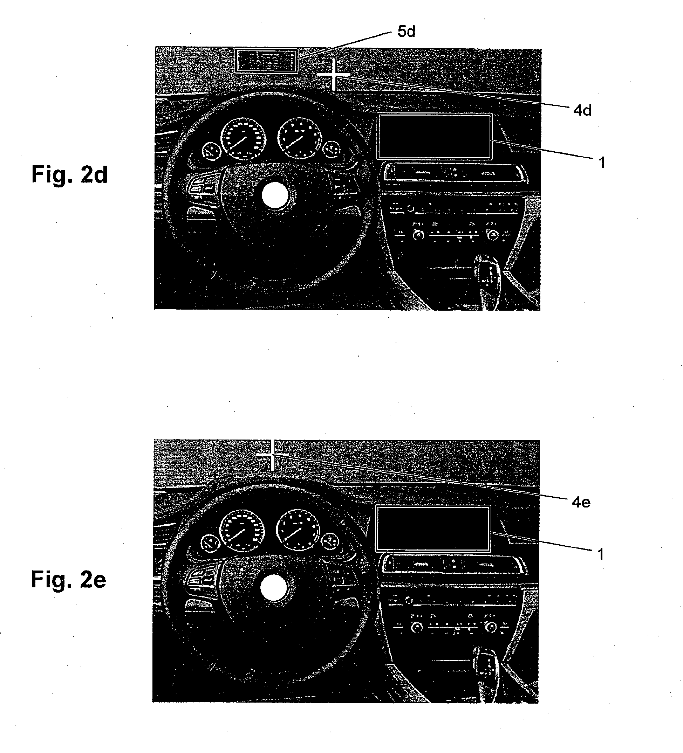

### Nicht-erfindungsgemäßer Lösungsansatz 2 - Dynamisch optische Warnausgabe "Flying Page" zur intuitiven Blickführung (vgl. Fig. 2a, 2b, 2c, 2d, 2e):

Eine Grundüberlegung, auf welcher der Lösungsansatz 2 beruht, ist die Blicklenkung durch bewegte Anzeigen. Das Auge soll intuitiv einer dynamischen Animation zu einem Zielpunkt (Primäres Sichtfeld = Fahrbahn bzw. Fahrszene) folgen. Sollte der Fahrer in einer Auffahrsituation den Blick z.B. auf ein Listenmenü im CID gerichtet haben, wandert der gesamte Inhalt des Menüs (d.h. das zum (Anfangs-)Zeitpunkt der Warnung angezeigte Anzeigebild des CID) mit angemessener Geschwindigkeit (innerhalb der Grenzen des Wahrnehmungsbereichs) in Richtung Fahrbahn. Der auf das Menü fixierte Blick des Fahrers wandert intuitiv mit der Bewegung in Richtung Scheibenwurzel mit (dies steht in Einklang mit der Theorie bzw. dem Erfordernis einer glatten Augenbewegung / Smooth Pursuit nach Krauzlis & Lisberger, 1994). Um ein Ziel bzw. Ende der Blickbewegung zu provozieren, wird als Zielort das vorher angezeigte Listenbild aus dem CID im HUD angezeigt. Dieses wird vorzugsweise nur solange angezeigt, wie es sich im peripheren Sichtfeld befindet, also während der glatten Augenbewegung. Sobald der Blick in Richtung HUD gerichtet ist, also auf die Fahrbahn, verschwindet das CID Bild aus dem HUD, um eine Fixation auf dieses zu vermeiden.

Die Figuren Fig. 2a, 2b, 2c, 2d, 2e (zu verstehen als zeitliche Folge von Momentaufnahmen) veranschaulichen eine bevorzugte Ausführungsform des Lösungsansatzes 2. In Fig. 2a ist im CID 1 noch eine "normale" Anzeige eines vom Fahrer aufgerufenen und betrachteten Listenmenüs dargestellt. Das Kreuz 4a symbolisiert die (Haupt-)Blickrichtung des Fahrers. In Fig. 2b hat die dynamisch optische Warnausgabe bereits begonnen. Das in Fig. 2a noch ganz und unverzerrt angezeigte Anzeigebild ist in Fig. 2b bereits zum Teil "aus dem CID 1 heraus" verschoben. Zu sehen ist nur noch ein verkleinerter Bildbereich 3b in der oberen linken Ecke des CID 1. Das Anzeigebild ist im vorliegenden Fall gegenüber Fig. 2a in erster Linie verschoben. Zusätzlich oder alternativ könnte auch eine Stauchung und/oder Beschneidung des zum Anfangszeitpunkt der Warnung angezeigten Anzeigebilds vorgenommen werden.

Durch den kontinuierlichen Übergang von Fig. 2a zu Fig. 2b entsteht beim Betrachter der Eindruck, das zum Anfangszeitpunkt der Warnung angezeigte Anzeigebild wandere bzw. fliege in Richtung Fahrszene "aus dem CID heraus". Der Blick des Fahrers folgt dem "davonfliegenden" Anzeigebild, vgl. Blickrichtungs-Kreuz 4b. In Fig. 2c ist das Anzeigebild noch weiter "aus dem CID 1 heraus" verschoben. Zu sehen ist nur noch ein abermals verkleinerter Bildbereich 3c in der oberen linken Ecke des CID 1. Der Blick des Fahrers folgt dem "davonfliegenden" Anzeigebild weiter, vgl. Blickrichtungs-Kreuz 4c. Um den Blick des Fahrers nicht zu weit schweifen zu lassen und um ihn besonders schnell in die gewünschte Richtung zu lenken, nämlich auf die Fahrszene, wird im HUD ein Abbild 5c des zum Anfangszeitpunkt der Warnung angezeigten Anzeigebilds des CID angezeigt. In Fig. 2d ist das Anzeigebild vollständig aus dem CID 1 verschwunden. Der Blick des Fahrers ist dem "davonfliegenden" Anzeigebild nun sogar aus dem CID heraus gefolgt, vgl. Blickrichtungs-Kreuz 4d. Der Blick des Fahrers ist aber noch nicht von der Anzeige 5d im HUD "eingefangen" worden, ist also noch nicht dort angekommen. In Fig. 2e schließlich ist der Blick des Fahrers bei der Anzeige des HUD angekommen, vgl. Blickrichtungs-Kreuz 4e, und die Anzeige des HUD wird wieder ausgeblendet.

### Erfindungsgemäßer Lösungsansatz 3 - Dynamisch optische Warnausgabe "LED-Animation" zur intuitiven Blickführung:

Auch der Lösungsansatz 3 beruht auf der Grundüberlegung einer Blicklenkung durch bewegte Anzeigen. Das Auge soll intuitiv einer dynamischen Animation zu einem Zielpunkt (Primäres Sichtfeld = Fahrbahn bzw. Fahrszene) folgen. Aufgrund der geometrischen Anordnung der Anzeigeorte im Fahrzeug ist die Bewegung der Animation zwischen CID und Scheibenwurzel aus Lösungsansatz 2 ("flying page") unterbrochen. Daher wird mit Hilfe einer LED Leiste die Unterbrechung überbrückt. Im Warnfall verschwindet das im CID angezeigte Menü und eine LED-Animation startet. Über die vorzugsweise ins Armaturenbrett integrierten (Hardware)-LEDs wird die Blickführung bis zur Scheibenwurzel weitergeführt. Hierdurch wird der Blick ohne räumliche Unterbrechung intuitiv bis auf die Straße gelenkt. Die Hardware-LEDs könnten vorteilhaft so in das Armaturenbrett integriert werden, dass sie nur im leuchtenden Zustand vom Fahrer wahrgenommen werden.

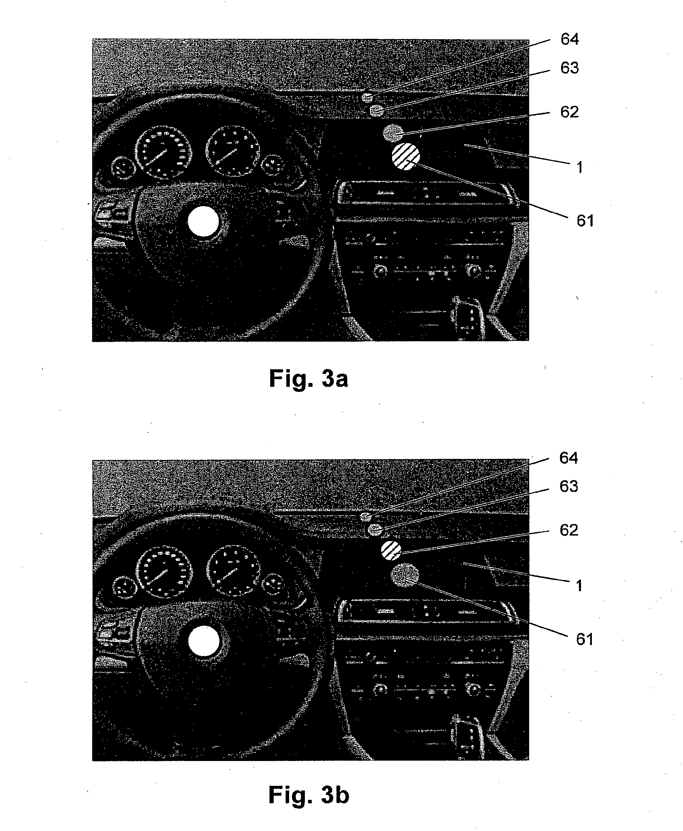

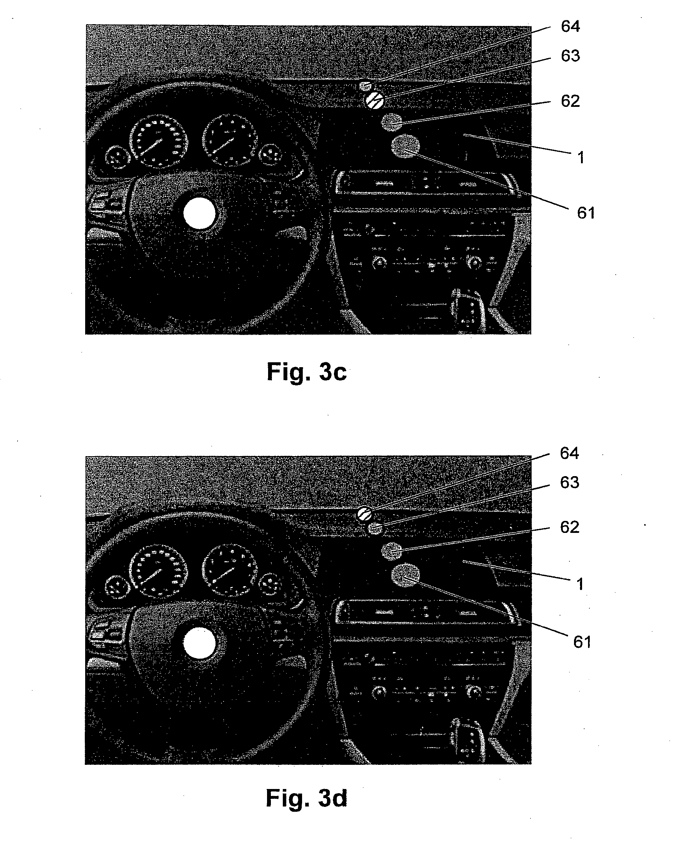

Die Figuren Fig. 3a, 3b, 3c, 3d (zu verstehen als zeitliche Folge von Momentaufnahmen) veranschaulichen eine bevorzugte Ausführungsform des Lösungsansatzes 3. Zwischen dem CID 1 und dem Fahrersichtfeld in der Windschutzscheibe ist eine Reihe von Leuchtdioden 61, 62, 63, 64 angeordnet (Die schematische Darstellung gemäß Fig. 3a, 3b, 3c, 3d könnte zu dem Trugschluss Anlass geben, die Leuchtdioden 61 und 62 wären vor oder auf dem CID 1 angeordnet. Dies ist jedoch ausdrücklich nicht der Fall, sondern ergibt sich lediglich aus dem Schema-Charakter der Figuren Fig. 3a, 3b, 3c, 3d.). In Fig. 3a hat die dynamisch optische Warnausgabe bereits begonnen. Die Leuchtdiode 61 ist beleuchtet (in Fig. 3a dargestellt durch Schraffur), stellt also einen Lichtpunkt dar, die anderen Leuchtdioden 62, 63, 64 sind noch dunkel. In Fig. 3b ist der zuvor "bei" der Leuchtdiode 61 befindliche Lichtpunkt weitergewandert zu Leuchtdiode 62. Die Leuchtdiode 62 ist nun beleuchtet (in Fig. 3b dargestellt durch Schraffur), die anderen Leuchtdioden 61, 63, 64 sind dunkel. In Fig. 3c ist der zuletzt "bei" der Leuchtdiode 62 befindliche Lichtpunkt weitergewandert zur Leuchtdiode 63. Die Leuchtdiode 63 ist nun beleuchtet (in Fig. 3c dargestellt durch Schraffur), die anderen Leuchtdioden 61, 62, 64 sind dunkel. In Fig. 3d ist der zuletzt "bei" der Leuchtdiode 63 befindliche Lichtpunkt weitergewandert zu Leuchtdiode 64. Die Leuchtdiode 64 ist nun beleuchtet (in Fig. 3d dargestellt durch Schraffur), die anderen Leuchtdioden 61, 62, 63 sind dunkel. Die Leuchtdioden-Reihe wird also verwendet zur Ausgabe einer Lichtanimation, welche einen entlang der Reihe wandernden Lichtpunkt darstellt. Der Blick des Fahrers folgt intuitiv der Bewegung des Lichtpunkts. Die Anzahl der Leuchtdioden (hier vier) ist je nach räumlichen Begebenheiten zwischen CID und Scheibenwurzel geeignet zu wählen. Sie sollte insbesondere groß genug sein, um zumindest annähernd den Eindruck einer kontinuierlichen Bewegung des Lichtpunkts entstehen zu lassen.

Die vorgeschlagenen Lösungsansätze 1, 2 und 3 haben gemeinsam, dass bei Detektion einer Gefahr (insbesondere Kollisionsgefahr) und gleichzeitiger visueller Ablenkung des Fahrers eine optische Warnung just dort angezeigt wird bzw. just dort "beginnt", wohin der Fahrer gerade seinen Blick gerichtet hat. Ausgegangen wird vom Use Case der Ausführung einer Nebenaufgabe im Kraftfahrzeug (z.B. Navigationseingabe) im CID. Grundsätzlich kann durch optisch dynamische Warnungen der Blick intuitiv schneller vom CID auf die Gefahrensituation (z.B. abbremsendes Vorderfahrzeug) gelenkt werden als durch ungerichtete akustische Warnungen. Um dabei die bewegten Hinweisreize zwischen den Anzeigeorten im Fahrzeug koordinieren zu können, ist es vorteilhaft, die Blickrichtung des Fahrers mit Hilfe einer Innenraumkamera online auszuwerten.

Die vorgeschlagenen Lösungsansätze tragen bei zur Erhöhung der Fahrsicherheit und Kundenakzeptanz durch intuitive Warnungen. Die vorgeschlagenen Lösungsansätze sind zudem einfach übertragbar auf andere Assistenzsysteme wie Spurverlassenswarner und Spurwechselassistenten.

Die vorgeschlagenen Lösungsansätze sind auch miteinander kombinierbar. Insbesondere die obigen Lösungsansätze 2 und 3 lassen sich vorteilhaft miteinander kombinieren. Wird das Anzeigebild des CID zunächst (vgl. Lösungsansatz 2) in Richtung der oberen linken Bildschirmecke (und somit in die Richtung des Fahrersichtfelds auf der Windschutzscheibe) verschoben bzw. gestaucht, so wird dadurch eine Blickbewegung in Richtung Fahrersichtfeld eingeleitet. Diese Blickbewegung kann dann vorteilhaft von einer LED-Lichtanimation (vgl. Lösungsansatz 3) "übernommen" bzw. "aufgenommen" werden und weiter in Richtung Fahrersichtfeld geführt werden.

So gesehen ist bei einer Kombination der Lösungsansätze 2 und 3 die Anzeigeeinheit ein Teil der in den Patentansprüchen genannten Beleuchtungsvorrichtung. Die Leuchtdioden zwischen CID und Fahrersichtfeld bilden die in den Patentansprüchen genannte Erstreckungslinie bzw. sind entlang dieser angeordnet. Die Grafikausgabe im CID gemäß Fig. 2a, 2b, 2c, 2d, 2e stellt eine bevorzugte Ausführungsform einer Grafikanimation dar, die eine in die Erstreckungslinie einmündende Grafikbewegung (Verschiebung des Anzeigebilds, vgl. Bezugszeichen 3b und 3c) umfasst. Wird eine sequenzielle Beleuchtung der Leuchtdioden zeitlich geeignet auf die Grafikanimation abgestimmt, so wird die Grafikbewegung aus Sicht des Fahrers durch die sequenzielle Beleuchtung der Leuchtdioden fortgesetzt.

## Patentansprüche

1. Kraftfahrzeug mit einer Vorrichtung zur Beeinflussung der Blickrichtung des Fahrers, wobei
- das Kraftfahrzeug über Mittel zur Gefahrendetektion und Mittel zur Ausgabe zumindest einer Warnung vor einer detektierten Gefahr verfügt,
- das Kraftfahrzeug über eine Anzeigeeinheit (1) zur Anzeige von Informations- und/oder Entertainmentinhalten verfügt, die im Wesentlichen mittig in der Armaturentafel des Kraftfahrzeugs angeordnet ist,
- im Fahrzeuginnenraum eine zur Ausgabe einer dynamischen Lichtanimation geeignete Beleuchtungsvorrichtung angeordnet ist, die sich im Wesentlichen von der Anzeigeeinheit hin zum Fahrersichtfeld auf der Windschutzscheibe des Kraftfahrzeugs erstreckt,
- zur Ausgabe einer Warnung vor einer Gefahr, die das Verkehrsgeschehen vor dem Kraftfahrzeug betrifft oder betreffen könnte, eine Lichtanimation ausgebbar ist, die eine Lichtbewegung in Richtung des Fahrersichtfelds darstellt,
- die Beleuchtungsvorrichtung sich zumindest teilweise im Wesentlichen linienartig entlang einer Erstreckungslinie von der Anzeigeeinheit hin zum Fahrersichtfeld erstreckt und die Lichtanimation so gestaltet ist, dass die dargestellte Lichtbewegung entlang der Erstreckungslinie erfolgt
- und die Beleuchtungsvorrichtung eine Reihe von mehreren Leuchtdioden (61, 62, 63, 64) umfasst, die einzeln entlang der Erstreckungslinie angeordnet sind und die sequenziell beleuchtbar sind, um zu der Lichtanimation beizutragen.

2. Kraftfahrzeug nach Anspruch 1, **dadurch gekennzeichnet,**
**dass** die Beleuchtungsvorrichtung aus der Reihe von Leuchtdioden besteht und dass die Lichtanimation ausschließlich in der sequenziellen Beleuchtung der Leuchtioden besteht.

3. Kraftfahrzeug nach Anspruch 1, **dadurch gekennzeichnet,**
**dass** die Beleuchtungsvorrichtung ferner die Anzeigeeinheit (1) selbst umfasst, dass zur Darstellung der Lichtbewegung zunächst eine Grafikanimation (3b, 3c) auf der Anzeigeeinheit ausgebbar ist, die eine in die Erstreckungslinie einmündende Grafikbewegung umfasst und die durch die sequenzielle Beleuchtung der Leuchtdioden fortgesetzt wird.

4. Kraftfahrzeug nach Anspruch 3, **dadurch gekennzeichnet,**
**dass** die Grafikbewegung eine Stauchung und/oder Bewegung und/oder Beschneidung eines zuvor von der Anzeigeeinheit dargestellten Anzeigebilds umfasst.

5. Kraftfahrzeug nach Anspruch 4, **dadurch gekennzeichnet,**
**dass** das Kraftfahrzeug ein Head-up Display aufweist und
**dass** während und/oder nach der Ausgabe der Lichtanimation zumindest vorübergehend ein Abbild des zuvor von der Anzeigeeinheit dargestellten Anzeigebilds durch das Head-up Display dargestellt wird.

6. Kraftfahrzeug nach einem der Ansprüche 1 bis 5, **dadurch gekennzeichnet,**
**dass** der Abstand der einzelnen Leuchtdioden zum Fahrersichtfeld hin zunimmt.

7. Kraftfahrzeug nach einem der Ansprüche 1 bis 6, **dadurch gekennzeichnet,**
**dass** die Leuchtdioden entlang der Oberfläche der Armaturentafel angeordnet sind und gegebenenfalls
**dass** die Leuchtdioden so in das Material der Armaturentafel eingebettet sind, dass sich eine im Wesentlichen ebene Oberfläche der Armaturentafel ergibt.

8. Kraftfahrzeug nach einem der Ansprüche 1 bis 7, **dadurch gekennzeichnet,**
**dass** das Kraftfahrzeug über eine Vorrichtung zur Erfassung der Blickrichtung des Fahrers verfügt und dass die Ausgabe der Lichtanimation in Abhängigkeit von der erfassten Blickrichtung erfolgt.

## Claims

1. A motor vehicle with a device for influencing the driver's viewing direction, wherein
- the motor vehicle has means for hazard detection and means for outputting at least one warning of a detected hazard,
- the motor vehicle has a display unit (1) for displaying information contents and/or entertainment contents, which display unit is arranged substantially centrally in the dashboard of the motor vehicle,
- a lighting device suitable to output a dynamic light animation is arranged in the passenger compartment, said lighting device extending substantially from the display unit to the driver's field of vision on the windscreen of the motor vehicle,
- a light animation, which shows a light movement in the direction of the driver's field of vision, can be output in order to output a warning of a hazard, which relates to, or could relate to, the traffic event in front of the motor vehicle,
- the lighting device extends, at least partially, substantially in a linear manner along an extension line from the display unit to the driver's field of vision and the light animation is configured in such a way that the light movement shown takes place along the extension line
- and the lighting device comprises a series of a plurality of light-emitting diodes (61, 62, 63, 64), which are arranged individually along the extension line and which can be illuminated sequentially in order to contribute to the light animation.

2. A motor vehicle according to claim 1, **characterised in that** the lighting device comprises the series of light-emitting diodes and **in that** the light animation consists exclusively of the sequential illumination of the light-emitting diodes.

3. A motor vehicle according to claim 1, **characterised in that** the lighting device furthermore comprises the display unit (1) itself, and **in that** in order to display the light movement, a graphics animation (3b, 3c) can firstly be output on the display unit, said graphics animation comprising a graphics movement that flows into the extension line and is continued by the sequential illumination of the light-emitting diodes.

4. A motor vehicle according to claim 3, **characterised in that** the graphics movement comprises a compression and/or movement and/or trimming of a display image previously shown by the display unit.

5. A motor vehicle according to claim 4, **characterised in that** the motor vehicle has a head-up display and **in that** during and/or after the outputting of the light animation, an image of the display image previously shown by the display unit is at least temporarily shown by the head-up display.

6. A motor vehicle according to any one of claims 1 to 5, **characterised in that** the distance of the individual light-emitting diodes to the driver's field of vision increases.

7. A motor vehicle according to any one of claims 1 to 6, **characterised in that** the light-emitting diodes are arranged along the surface of the dashboard and optionally **in that** the light-emitting diodes are embedded in the material of the dashboard in such a way that a substantially flat surface of the dashboard is produced.

8. A motor vehicle according to any one of claims 1 to 7, **characterised in that** the motor vehicle has a device for detecting the driver's viewing direction and **in that** the light animation is output depending on the detected viewing direction.

## Revendications

1. Véhicule comprenant un dispositif permettant d'agir sur la direction de visée du conducteur, dans lequel :
- le véhicule est équipé de moyens de détection de dangers et de moyens permettant de délivrer au moins une alarme d'un danger détecté,
- le véhicule est équipé d'une unité d'affichage (1) permettant d'afficher des contenus d'information et/ou d'animation qui est essentiellement positionnée au milieu du tableau de bord du véhicule,
- dans l'habitacle interne du véhicule est monté en dispositifs d'éclairage susceptible de délivrer en sortie une animation lumineuse dynamique qui s'étend essentiellement de l'unité d'affichage vers le champ de vision du conducteur sur le pare brise du véhicule,
- pour permettre de délivrer une alarme d'un danger qui concerne ou pourrait concerner le trafic à l'avant du véhicule, il est possible de délivrer une animation lumineuse qui correspond à un déplacement de lumière en direction du champ de vision du conducteur,
- le dispositif d'éclairage s'étend au moins partiellement, essentiellement linéairement, le long d'une ligne s'étendant de l'unité d'affichage vers le champ de vision du conducteur, et l'animation lumineuse est réalisée de sorte que le déplacement de lumière représenté s'effectue le long de la ligne d'extension, et
- le dispositif d'éclairage comprend une série de diodes électroluminescentes (61, 62, 63, 64) qui sont individuellement positionnées le long de la ligne d'extension et qui peuvent être éclairées de manière séquentielle pour participer à l'annulation lumineuse.

2. Véhicule conforme à la revendication 1,
**caractérisé en ce que**
le dispositif d'éclairage est constitué par la série de diodes électroluminescentes et l'animation lumineuse est exclusivement constituée par l'éclairage séquentiel de ces diodes électroluminescentes.

3. Véhicule conforme à la revendication 1,
**caractérisé en ce que**
le dispositif d'éclairage renferme en outre l'unité d'affichage (1) elle-même, pour représenter le déplacement de lumière, une animation graphique (3b, 3c) peut tout d'abord être délivrée sur l'unité d'affichage, animation graphique qui comporte un déplacement graphique débouchant dans la ligne d'extension et qui est poursuivi par l'éclairage séquentiel des diodes électroluminescentes.

4. Véhicule conforme à la revendication 3,
**caractérisé en ce que**
le déplacement graphique comprend un écrasement et/ou un déplacement et/ou une coupure d'une image d'affichage auparavant représentée par l'unité d'affichage.

5. Véhicule conforme à la revendication 4,
**caractérisé en ce que**
le véhicule comporte un premier collimateur de pilotage et, pendant et/ou après la délivrance de l'animation lumineuse, une image de l'image d'affichage auparavant représentée par l'unité d'affichage est au moins temporairement représentée au travers du collimateur de pilotage.

6. Véhicule conforme à l'une des revendications 1 à 5,
**caractérisé en ce que**
la distance entre les différentes diodes électroluminescentes augmentent vers le champ de vision du conducteur.

7. Véhicule conforme à l'une des revendications 1 à 6,
**caractérisé en ce que**
les diodes électroluminescentes sont montées le long de la surface du tableau de bord, et le cas échéant,
les diodes électroluminescentes sont noyées dans le matériau constitutif du tableau de bord de façon à obtenir une surface essentiellement plane du tableau de bord.

8. Véhicule conforme à une des revendications 1 à 7,
**caractérisé en ce que**
le véhicule est équipé d'un dispositif de détection de la direction de visée du conducteur, et la délivrance de l'animation lumineuse s'effectue en fonction de la direction de visée détectée.
